# EUROPÄISCHE PATENTSCHRIFT

(11) **EP 4 274 956 B1**
(45) Veröffentlichungstag und Bekanntmachung des Hinweises auf die Patenterteilung: **04.12.2024**
(21) Anmeldenummer: 21839397.3
(22) Anmeldetag: 13.12.2021
(51) Int. Cl.: F02M 21/02, F02M 51/06

(54) **GASDOSIERVENTIL ZUR DOSIERTEN ABGABE VON GASFÖRMIGEM KRAFTSTOFF**
GAS METERING VALVE FOR THE METERED DISPENSING OF GASEOUS FUEL
SOUPAPE DE DOSAGE DE GAZ POUR LA DISTRIBUTION DOSÉE DE CARBURANT GAZEUX

(30) Priorität: 11.01.2021 DE 102021200180
(43) Veröffentlichungstag der Anmeldung: 15.11.2023
(73) Patentinhaber: Robert Bosch GmbH, 70442 Stuttgart (DE)
(72) Erfinder: KRAUSE, Michael, 67705 Trippstadt (DE); BUROCK, Torsten, 71665 Vaihingen An Der Enz (DE); BOSSE, Daniel, 71706 Markgroeningen (DE); CLAUSS, Helmut, 71735 Eberdingen (DE); MUELLER, Martin, 71696 Moeglingen (DE); ZERLE, Lorenz, 86179 Augsburg (DE); FISCHER, Fabian, 71334 Waiblingen (DE); TUERKER, Oezguer, 70839 Gerlingen (DE); BEIER, Marco, 07407 Rudolstadt (DE)
(86) Internationale Anmeldenummer: PCT/EP2021/085473
(87) Internationale Veröffentlichungsnummer: WO 2022/148610

(56) Entgegenhaltungen:
- DE-A1- 102017 212 725
- DE-A1- 102020 201 973
- US-B2- 10 036 352

## Beschreibung

Die Erfindung betrifft ein Gasdosierventil, wie es zur dosierten Abgabe von gasförmigem Kraftstoff Verwendung findet, insbesondere zur Einbringung von gasförmigem Kraftstoff in einen Brennraum einer Brennkraftmaschine

### Stand der Technik

Aus dem Stand der Technik sind Gasdosierventile bekannt, bei denen gasförmiger Brennstoff dosiert und in kurzen Zeitabständen direkt in einen Brennraum einer Brennkraftmaschine oder auch in einen Ansaugtrakt einer Brennkraftmaschine abgegeben werden kann. Dabei können verschiedene gasförmige Brennstoffe dosiert werden, insbesondere auch Wasserstoff. Die dosierte Abgabe von Wasserstoff stellt besondere Anforderungen an das Dosierventil, da Wasserstoff zum einen chemisch sehr reaktiv ist, was entsprechend widerstandsfähige Materialien erfordert. Zum anderen diffundiert Wasserstoff aufgrund der kleinen H₂-Moleküle auch durch sehr kleine Spalte und lässt sich entsprechend nur schwer völlig abdichten. Eine rein metallische Dichtung ist daher meistens nicht ausreichend, um Wasserstoff komplett abzudichten, so dass die Verwendung von elastischen Materialien zur Abdichtung notwendig ist, also Elastomere, wie Kunststoffe oder Gummi.

Gasdosierventile, die den Wasserstoff direkt in einen Brennraum einer Brennkraftmaschine abgeben, sind an ihrem brennraumseitigen Ende den hohen Temperaturen im Brennraum ausgesetzt und müssen entsprechend hitzebeständig sein. Die Verwendung eines Elastomers an einem brennraumseitigen Ventilsitz scheidet deshalb aus, da Elastomere solchen Temperaturen nicht dauerhaft standhalten können. Zur Lösung dieses Problems ist aus der DE 10 2020 201 973 A1 ein Gasdosierventil bekannt, das zwei Ventilelemente aufweist, wobei das erste Ventilelement eine Einlassöffnung des Dosierventils steuert, während das zweite Ventilelement die brennraumseitige Auslassöffnung öffnet und schließt. Nur das erste Ventilelement, das weit vom Brennraum entfernt ist, ist mit einer Elastomerdichtung ausgestattet, um eine völlige Abdichtung des Wasserstoffs zu gewährleisten, während der Brennraum nahe dem Dichtsitz als metallische Dichtung ausgebildet ist. Bei geschlossenem Gasdosierventil ist so eine völlige Abdichtung gewährleistet, während die eigentliche Eindosierung, d.h. das kurzeitige Öffnen und Schließen des Dosierventils, auch über das zweite Ventilelement mit der metallischen Dichtung erfolgen kann.

US 10 036 352 B2 offenbart ein vorveröffentlichtes Gasdosierventil zur dosierten Abgabe von gasförmigem Kraftstoff.

Beide Ventilelemente werden dabei von einem einzigen Elektromagneten gesteuert, der auf das erste Ventilelement wirkt, wobei das erste Ventilelement bei seiner Öffnungsbewegung das zweite Ventilelement mitnimmt. Da ein möglichst großer Abstand der beiden Ventilelemente erreicht werden soll, ist zwischen dem ersten Ventilelement und dem zweiten Ventilelement ein die Bewegung übertragendes Kopplerelement vorhanden, beispielsweise in Form einer Kopplerhülse. Alle beweglichen Bauteile sind innerhalb des Gehäuses geführt, wobei jedoch beachtet werden muss, dass der gasförmige Brennstoff keinerlei Schmiereigenschaften hat und die Führungsspalte der Ventilelemente deshalb relativ groß ausgebildet sein müssen, damit die Bauteile im Gehäuse nicht klemmen oder übermäßig verschleißen. Daher besteht die Gefahr, dass ein möglicher Schiefstand des ersten Ventilelements, das auch als Magnetanker dient, auf die übrigen Bauteile übertragen wird, insbesondere auf die Kopplerhülse, so dass es an bestimmten Stellen zwischen dem ersten Ventilelement oder der Kopplerhülse einerseits und dem Gehäuse andererseits zu erhöhtem Verschleiß kommt.

### Vorteile der Erfindung

Das erfindungsgemäße Gasdosierventil weist demgegenüber den Vorteil auf, dass die Ventilelemente exakt innerhalb des Gasraums geführt sind, ohne dass es zu einem erhöhten Verschleiß zwischen dem Gehäuse und den Ventilelementen bzw. der Kopplerhülse kommt und gleichzeitig die Montierbarkeit des Gasdosierventils nicht beeinträchtigt ist. Dazu weist das Gasdosierventil ein Gehäuse auf, in dem ein Gasraum mit einer Einlassöffnung und einer Auslassöffnung ausgebildet ist. Im Gasraum ist ein Ventilelement längsbeweglich angeordnet, das durch seine Längsbewegung die Einlassöffnung öffnet und schließt, wobei das Ventilelement durch einen elektrischen Aktor bewegbar ist. Im Gasraum ist darüber hinaus eine Düsennadel angeordnet, die mit einem Düsensitz zum Öffnen und Schließen der Auslassöffnung zusammenwirkt, wobei zwischen dem Ventilelement und der Düsennadel eine Kopplerhülse angeordnet ist, die die Bewegung des Ventilelements auf die Düsennadel überträgt. Dabei ist die Kopplerhülse in einer Aufnahmeöffnung des Ventilelements spielfrei aufgenommen.

Die Bewegung des Ventilelements, das mit dem elektrischen Aktor zusammenwirkt, wird über die Kopplerhülse auf die Düsennadel weitergegeben. Da die Kopplerhülse in der Aufnahmeöffnung spielfrei aufgenommen ist, stabilisieren sich das Ventilelement und die Kopplerhülse gegenseitig, so dass eine Desachsierung der beiden Bauteile innerhalb des Gehäuses verhindert wird. Trotzdem lässt sich das Gasdosierventil gut montieren, da beide Bauteile separat gefertigt werden können und erst bei der Montage zusammengesteckt und damit fest verbunden werden.

In einer vorteilhaften Ausgestaltung der Erfindung wird der Gasstrom von der Einlassöffnung zur Auslassöffnung durch die Kopplerhülse geführt. Dadurch ergeben sich große konstruktive Freiheiten bei der Führung der Kopplerhülse und damit bei der Optimierung der Kraftübertragung vom Ventilelement auf die Düsennadel. Dabei ist die Kopplerhülse in vorteilhafter Weise als Hohlzylinder ausgebildet und die Aufnahmeöffnung am Ventilelement als Sackbohrung ausgebildet. Um eine feste Verbindung der beiden Bauteile zu ermöglichen, ist der Außendurchmesser des Abschnitts der Kopplerhülse, der innerhalb der Aufnahmeöffnung angeordnet ist, im unmontierten Zustand 1 bis 10 µm größer als der Innendurchmesser der Aufnahmeöffnung, um eine feste Verbindung über die Lebenszeit des Dosierventils zu bilden.

In einer weiteren vorteilhaften Ausgestaltung weist die Kopplerhülse einen ersten Hülsenabschnitt und einen zweiten Hülsenabschnitt auf, wobei der erste Hülsenabschnitt aus einem ferromagnetischen Werkstoff gefertigt ist und in der Aufnahmeöffnung des Ventilelements aufgenommen ist, während der zweite Hülsenabschnitt aus einem nicht ferromagnetischen Material gefertigt ist, wobei beide Hülsenabschnitte fest miteinander verbunden sind. Da das erste Ventilelement als Magnetanker dient, wenn der elektrische Aktor als Elektromagnet ausgebildet ist, verstärkt eine ferromagnetische Kopplerhülse die Wirkung des Elektromagneten auf den Magnetanker, also das erste Ventilelement. Ist jedoch die gesamte Kopplerhülse aus ferromagnetischem Material gefertigt, so wird das Magnetfeld zu stark gestreut, so dass die effektive magnetische Kraft auf das Ventilelement gemindert wird. Da nur der Hülsenabschnitt ferromagnetisch ist, der innerhalb des Ventilelements angeordnet ist, ergibt sich damit eine Verstärkung der Magnetkraft, ohne dass ein Streufeld erzeugt wird, was das Magnetfeld in unerwünschte Bereiche des Gehäuses lenkt.

In vorteilhafter Weise sind dabei die beiden Hülsenabschnitte aus metallischen Werkstoffen gefertigt und die feste Verbindung ist durch eine Schweißverbindung realisiert, so dass beide Hülsenabschnitte fest und dauerhaft miteinander verbunden sind.

In einer weiteren vorteilhaften Ausgestaltung ist die Kopplerhülse seitlich im Gasraum an zwei axial voneinander beabstandeten Führungsabschnitten geführt. Da eine feste Verbindung mit dem Ventilelement besteht, kann so auch das Ventilelement durch die Kopplerhülse geführt werden, wenn ein entsprechend großer Spalt zwischen der Außenwand des Ventilelements und dem Gehäuse bzw. der Wand des Gasraums ausgebildet ist. Damit wird Reibung und damit übermäßiger Verschleiß zwischen dem Ventilelement und der Wand des Gasraums ausgeschlossen.

### Zeichnung

In der Zeichnung sind verschiedene Ausführungsbeispiele des erfindungsgemäßen Gasdosierventils dargestellt. Es zeigt:
- Figur 1: im Längsschnitt ein erstes Ausführungsbeispiel eines erfindungsgemäßen Gasdosierventils,
- Figur 2: eine vergrößerte Darstellung der Figur 1 im Bereich der Kopplerhülse und
- Figur 3: ein weiteres Ausführungsbeispiel des erfindungsgemäßen Gasdosierventils in der gleichen Darstellung wie Figur 2.

### Beschreibung der Ausführungsbeispiele

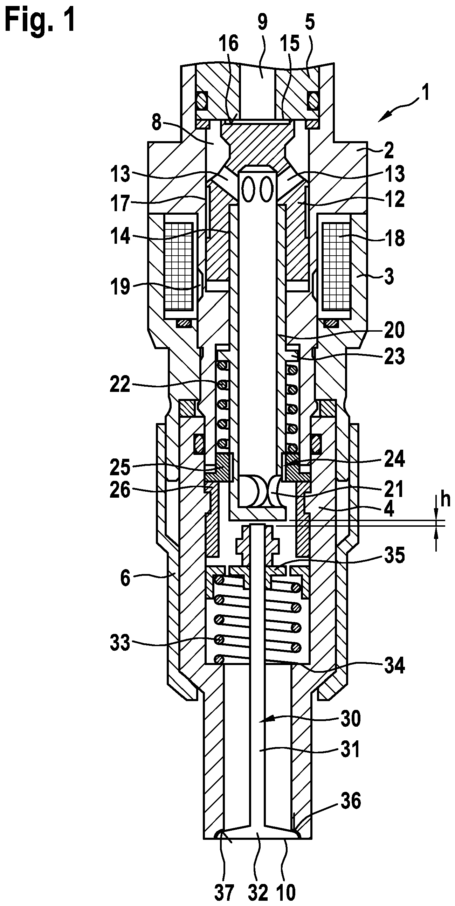

In **Figur 1** ist ein erfindungsgemäßes Gasdosierventil im Längsschnitt dargestellt. Das Gasdosierventil weist ein Gehäuse 1 auf, das einen Haltekörper 2, einen Magnetkörper 3, einen Düsenkörper 4 und einen Anschlusskörper 5 umfasst, die mittels einer Spannmutter 6 und weiterer, in der Zeichnung nicht dargestellter Spannelemente gasdicht gegeneinander verspannt sind. Im Anschlusskörper 5 ist ein in der Zeichnung nicht dargestellter Anschluss vorhanden, über den der gasförmige Brennstoff in einen Gasraum 8 geleitet wird, der im Haltekörper 2, dem Magnetkörper 3 und dem Düsenkörper 4 ausgebildet ist. Dabei weist der Gasraum 8 eine Einlassöffnung 9 und eine Auslassöffnung 10 auf, wobei die Einlassöffnung 9 in der Zeichnung der **Figur 1** am oberen Ende des Gasdosierventils ausgebildet ist, während die Auslassöffnung 10 am unteren Ende gezeigt ist. Im Gasraum 8 ist ein Ventilelement 12 längsverschiebbar angeordnet. Das Ventilelement 12 weist dabei eine Dichtfläche 16 auf, mit der das Ventilelement 12 mit einem Ventilsitz 15 zum Öffnen und Schließen der Einlassöffnung 9 zusammenwirkt, wobei auf der Dichtfläche 16 ein Elastomer aufgebracht ist, um die Einlassöffnung 9 gasdicht gegenüber dem Gasraum 8 zu verschließen. Im Ventilelement 12 sind mehrere Schrägbohrungen 13 ausgebildet, über die gasförmiger Brennstoff in eine Aufnahmeöffnung 14 einströmen kann, die als Sackbohrung ausgebildet ist. Das Ventilelement 12 wird in einem ersten Führungsabschnitt 17 im Gasraum 8 geführt, wobei der erste Führungsabschnitt 17 dabei beispielsweise eine gehärtete Hülse umfasst, die die Reibung zwischen dem Ventilelement 12 und der Wand des Gasraums 8 mindert.

In der Aufnahmeöffnung 14 ist eine Kopplerhülse 20 aufgenommen, die als Hohlzylinder ausgebildet ist. Die Kopplerhülse 20 weist an ihrem auslassseitigen Ende mehrere Öffnungen 21 auf, über die der gasförmige Brennstoff austreten und weiter in Richtung der Auslassöffnung 10 strömen kann. Der Außendurchmesser der Kopplerhülse 20 ist dabei so bemessen, dass er spielfrei in der Aufnahmeöffnung 14 aufgenommen ist, so dass eine feste Verbindung zwischen Ventilelement 12 und Kopplerhülse 20 gebildet wird. Die Kopplerhülse 20 ist von einer Kopplerfeder 22 umgeben, die sich mit einem Ende an einem Stützring 23 abstützt, der an der Kopplerhülse 20 befestigt ist oder einstückig mit dieser ausgebildet ist, und die sich mit dem anderen Ende an einem Federstützring 25 abstützt, der sich über ein Stützelement 26 am Düsenkörper 4 abstützt, so dass über die vorgespannte Kopplerfeder 22 eine Kraft in Richtung der Einlassöffnung 9 auf die Kopplerhülse 20 und damit auch auf das Ventilelement 12 ausgeübt wird.

Zur Bewegung des Ventilelements 12 dient ein Elektromagnet 18, der im Magnetkörper 3 angeordnet ist und das Ventilelement 12 umgibt. Um das Magnetfeld des Elektromagneten 18 optimal zu formen, weist der Haltekörper 2 dazu eine Dünndrehung 19 auf, d.h. einen verjüngten Abschnitt im Haltekörper 2, so dass die Magnetkraft auf das Ventilelement 12 optimiert wird. Die Kopplerhülse 20 ist einem zweiten Führungsabschnitt 24 innerhalb des Gehäuses geführt, so dass der Verbund aus Ventilelement 12 und Kopplerhülse 20 über den ersten Führungsabschnitt 17 und den zweiten Führungsabschnitt 24 geführt wird. Damit ist eine reibungsarme Bewegung von Ventilelement 12 und Kopplerhülse 20 gewährleistet.

Im Düsenkörper 4 ist eine Düsennadel 30 ebenfalls längsverschiebbar angeordnet, die einen Schaft 31 und einen Ventilteller 32 umfasst. Am Ventilteller 32 ist eine Dichtfläche 36 ausgebildet, mit der der Ventilteller 32 mit einem Düsensitz 37 zum Öffnen und Schließen der Auslassöffnung 10 zusammenwirkt. Die Düsennadel 30 ist dabei von einer Düsenfeder 33 umgeben, die sich mit einem Ende an einem Absatz 34 im Gasraum 8 abstützt und mit dem anderen Ende an einem Federteller 35, der fest mit der Düsennadel 30 verbunden ist. Dadurch ergibt sich über die vorgespannte Düsenfeder 33 eine Längskraft auf die Düsennadel 31 in Richtung der Einlassöffnung 9. Im geschlossenen Zustand des Gasdosierventils, bei dem das Ventilelement 12 am Ventilsitz 15 aufsitzt und die Düsennadel 31 am Düsensitz 37, sind die Kopplerhülse 20 und die Düsennadel 30 voneinander beabstandet, d.h. dass zwischen dem auslassseitigen Ende der Kopplerhülse 20 und der Stirnfläche der Düsennadel 30 ein Abstand h gebildet ist. Dieser Abstand dient dem Ausgleich von thermischen Ausdehnungen, wie sie beim Betrieb des Gasdosierventils unvermeidlich sind.

Die Funktionsweise des Gasdosierventils ist wie folgt: Durch Bestromung des Elektromagneten 18 wird das Ventilelement 12 vom Ventilsitz 15 weggezogen, so dass die Einlassöffnung 9 freigegeben wird und gasförmiger Brennstoff in den Gasraum 8 einströmt. Über die Querbohrungen 13 gelangt der gasförmige Brennstoff in die Aufnahmeöffnung 14 und damit in die Kopplerhülse 20, von wo der gasförmige Brennstoff weiter in Richtung der Auslassöffnung 10 strömt. Durch die Bewegung des Ventilelements 12 wird auch die Kopplerhülse 20 in Richtung der Auslassöffnung 10 bewegt, bis sie an der Düsennadel 30 zur Anlage kommt. Durch die weitere Bewegung der Kopplerhülse 20 bzw. des Ventilelements 12 wird die Düsennadel 30 nach außen gedrückt, so dass ein Strömungsquerschnitt an der Auslassöffnung 10 aufgesteuert wird, durch den der gasförmige Brennstoff ausströmen kann. Zur Beendigung der Gasdosierung wird der Elektromagnet 18 ausgeschaltet, so dass die Kopplerfeder 22 und die Düsenfeder 33 die Kopplerhülse 20 und damit das Ventilelement 12 bzw. die Düsennadel 30 zurück in ihre Ausgangsstellung drücken.

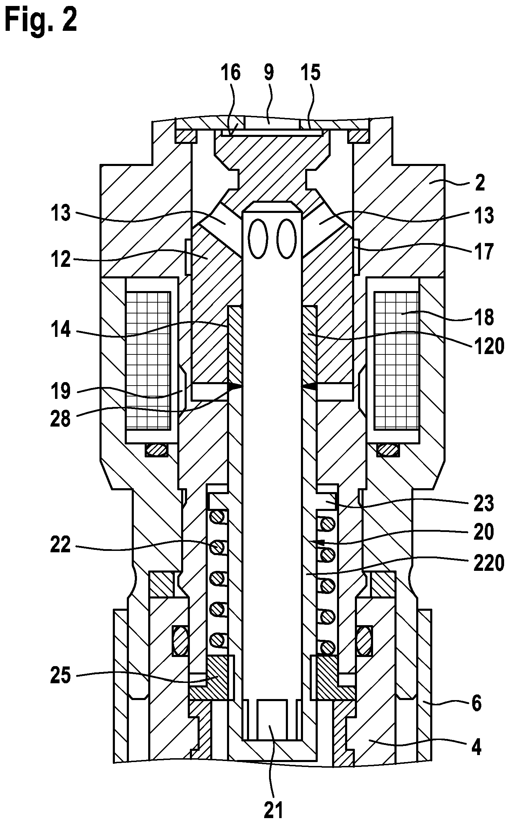

In **Figur 2** ist ein weiteres Ausführungsbeispiel des erfindungsgemäßen Gasdosierventils in einer vergrößerten Darstellung der Kopplerhülse 20 gezeigt. Die Kopplerhülse 20 umfasst hier einen ersten Hülsenabschnitt 120 und einen zweiten Abschnitt 220, wobei der erste Hülsenabschnitt 120 innerhalb der Aufnahmeöffnung 14 angeordnet ist. Der erste Hülsenabschnitt 120 ist aus einem ferromagnetischen Werkstoff gefertigt, während der zweite Hülsenabschnitt 220 aus einem amagnetischen Werkstoff gefertigt ist. Beide Hülsenabschnitte 120, 220 sind dabei fest miteinander über eine Schweißverbindung 28 verbunden. Da der erste Hülsenabschnitt ferromagnetisch ist und fest mit dem Ventilelement 12 verbunden, ergibt sich eine stärkere Magnetkraft auf das Ventilelement 12 und damit wird eine raschere Bewegung des Ventilelements 12 ermöglicht. Wäre die gesamte Kopplerhülse 22 aus einem ferromagnetischen Material, so würde das Magnetfeld des Elektromagneten 18 gestreut und damit die effektive Magnetkraft auf das Ventilelement 12 gemindert.

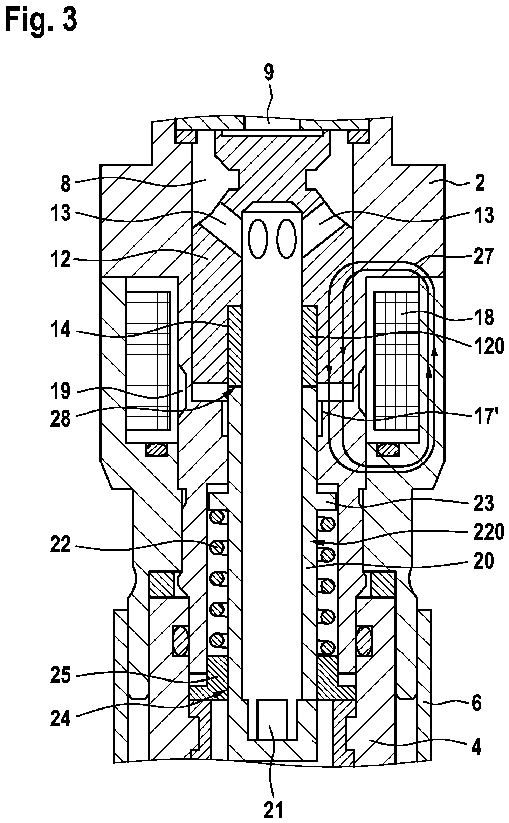

**Figur 3** zeigt ein weiteres Ausführungsbeispiel des erfindungsgemäßen Gasdosierventils. Dabei wird der Verbund aus Ventilelement 12 und Kopplerhülse 20 nicht mehr über einen ersten Führungsabschnitt am Ventilelement 12 geführt, sondern über einen ersten Führungsabschnitt 17' einer Kopplerhülse, so dass die gesamte Führung des Verbundes aus Ventilelement 12 und Kopplerhülse 20 über die Kopplerhülse 20 geschieht. Die beiden Führungsabschnitte 17' und 24 an der Kopplerhülse sorgen für eine Führung des Ventilelements 12, das entsprechend große Spalte zwischen seiner Außenseite und der Wand des Gasraums aufweist, so dass eine Berührung und damit ein Verschleiß zwischen dem Ventilelement 12 und der Wand des Gasraums 8 nicht stattfindet. Zur Illustration des Magnetfeldes, das über die Dünndrehung 19 und den magnetischen ersten Hülsenabschnitt 120 geführt ist, zeigt **Figur 3** auf der rechten Seite die Magnetfeldlinien 27 des Elektromagneten 18 und ihr ungefährer Verlauf innerhalb des Gasdosierventils.

## Patentansprüche

1. Gasdosierventil zur dosierten Abgabe von gasförmigem Kraftstoff, mit einem Gehäuse (1), in dem ein Gasraum (8) mit einer Einlassöffnung (9) und einer Auslassöffnung (10) ausgebildet ist, wobei im Gasraum (8) ein Ventilelement (12) längsbeweglich angeordnet ist, das durch seine Längsbewegung die Einlassöffnung (9) öffnet und schließt, wobei das Ventilelement (12) eine Dichtfläche (16) aufweist, mit der das Ventilelement (12) mit einem Ventilsitz (15) zusammenwirkt, wobei auf der Dichtfläche (16) ein Elastomer aufgebracht ist, um die Einlassöffnung (9) gasdicht gegenüber dem Gasraum (8) zu verschließen, und wobei das Ventilelement (12) durch einen elektrischen Aktor (18) bewegbar ist, und mit einer im Gasraum (8) angeordneten Düsennadel (30), die mit einem Düsensitz (37) zum Öffnen und Schließen der Auslassöffnung (10) zusammenwirkt, wobei zwischen dem Ventilelement (12) und der Düsennadel (30) eine Kopplerhülse (20) angeordnet ist, die die Längsbewegung des Ventilelements (12) auf die Düsennadel (30) überträgt,
**dadurch gekennzeichnet,**
**dass** die Kopplerhülse (20) in einer Aufnahmeöffnung (14) des Ventilelements (12) spielfrei aufgenommen ist.

2. Gasdosierventil nach Anspruch 1, **dadurch gekennzeichnet, dass** der Gasstrom von der Einlassöffnung (9) zur Auslassöffnung (10) durch die Kopplerhülse (20) geführt ist.

3. Gasdosierventil nach Anspruch 1 oder 2, **dadurch gekennzeichnet, dass** die Kopplerhülse (20) als Hohlzylinder ausgebildet ist und die Aufnahmeöffnung (14) im Ventilelement (12) eine Sackbohrung ist.

4. Gasdosierventil nach Anspruch 3, **dadurch gekennzeichnet, dass** der Innendurchmesser der Aufnahmeöffnung (14) im unmontierten Zustand 1 bis 10 µm kleiner ist als der Außendurchmesser des Abschnitts der Kopplerhülse (20), der innerhalb der Aufnahmeöffnung (14) angeordnet ist.

5. Gasdosierventil nach einem der Ansprüche 1 bis 4, **dadurch gekennzeichnet, dass** die Kopplerhülse (20) einen ersten Hülsenabschnitt (120) und einen zweiten Hülsenabschnitt (220) umfasst, wobei der erste Hülsenabschnitt (120) aus einem ferromagnetischen Werkstoff gefertigt ist und in der Aufnahmeöffnung (14) des Ventilelements (20) aufgenommen ist, und der zweite Hülsenabschnitt (220) aus einem nicht ferromagnetischen Material gefertigt ist, wobei beide Hülsenabschnitte (120; 220) fest miteinander verbunden sind.

6. Gasdosierventil nach Anspruch 5, **dadurch gekennzeichnet, dass** die beiden Hülsenabschnitte (120; 220) aus metallischen Werkstoffen gefertigt sind und miteinander verschweißt sind.

7. Gasdosierventil nach einem der Ansprüche 1 bis 6, **dadurch gekennzeichnet, dass** die Kopplerhülse (20) seitlich im Gasraum (8) an wenigstens zwei axial voneinander beabstandeten Führungsabschnitten (17'; 24) geführt ist.

8. Gasdosierventil nach Anspruch 7, **dadurch gekennzeichnet, dass** das Ventilelement (12) seitlich ein so großes Führungsspiel aufweist, dass es ausschließlich durch die Kopplerhülse (20) in radialer Richtung geführt ist.

9. Gasdosierventil nach einem der Ansprüche 1 bis 8, **dadurch gekennzeichnet, dass** der elektrische Aktor ein Elektromagnet (18) ist und das Ventilelement (12) als Tauchanker ausgebildet ist.

## Claims

1. Gas-metering valve for metered dispensing of gaseous fuel, having a housing (1) in which a gas space (8) with an inlet opening (9) and an outlet opening (10) is formed, wherein a valve element (12) is arranged in a longitudinally movable manner in the gas space (8), said valve element opening and closing the inlet opening (9) by way of its longitudinal movement, wherein the valve element (12) has a sealing surface (16) by way of which the valve element (12) interacts with a valve seat (15), wherein an elastomer is applied to the sealing surface (16) in order for the inlet opening (9) to be closed off in a gas-tight manner in relation to the gas space (8), and wherein the valve element (12) is able to be moved by an electrical actuator (18), and having a nozzle needle (30) which is arranged in the gas space (8) and interacts with a nozzle seat (37) for opening and closing the outlet opening (10), wherein a coupling sleeve (20) is arranged between the valve element (12) and the nozzle needle (30), said coupling sleeve transmitting the longitudinal movement of the valve element (12) to the nozzle needle (30),
**characterized**
**in that** the coupling sleeve (20) is received without play in a receiving opening (14) of the valve element (12).

2. Gas-metering valve according to Claim 1, **characterized in that** the gas stream from the inlet opening (9) to the outlet opening (10) is conducted through the coupling sleeve (20).

3. Gas-metering valve according to Claim 1 or 2, **characterized in that** the coupling sleeve (20) is in the form of a hollow cylinder, and the receiving opening (14) in the valve element (12) is a blind bore.

4. Gas-metering valve according to Claim 3, **characterized in that**, in the unfitted state, the inner diameter of the receiving opening (14) is 1 to 10 µm smaller than the outer diameter of that portion of the coupling sleeve (20) which is arranged within the receiving opening (14).

5. Gas-metering valve according to one of Claims 1 to 4, **characterized in that** the coupling sleeve (20) comprises a first sleeve portion (120) and a second sleeve portion (220), wherein the first sleeve portion (120) is made of a ferromagnetic material and is received in the receiving opening (14) of the valve element (20), and the second sleeve portion (220) is made of a non-ferromagnetic material, wherein both sleeve portions (120; 220) are connected fixedly to one another.

6. Gas-metering valve according to Claim 5, **characterized in that** the two sleeve portions (120; 220) are made of metallic materials and are welded to one another.

7. Gas-metering valve according to one of Claims 1 to 6, **characterized in that** the coupling sleeve (20) is guided laterally in the gas space (8) at at least two guide portions (17'; 24) spaced apart axially from one another.

8. Gas-metering valve according to Claim 7, **characterized in that**, laterally, the valve element (12) has guidance play of such a magnitude that it is guided in the radial direction exclusively by way of the coupling sleeve (20).

9. Gas-metering valve according to one of Claims 1 to 8, **characterized in that** the electrical actuator is an electromagnet (18), and the valve element (12) is in the form of a plunger-type armature.

## Revendications

1. Soupape de dosage de gaz pour la distribution dosée de carburant gazeux, avec un boîtier (1) dans lequel est réalisée une chambre de gaz (8) avec une ouverture d'entrée (9) et une ouverture de sortie (10), un élément de soupape (12) étant agencé dans la chambre de gaz (8) de manière à pouvoir se déplacer longitudinalement, qui ouvre et ferme l'ouverture d'entrée (9) par son déplacement longitudinal, l'élément de soupape (12) présentant une surface d'étanchéité (16) avec laquelle l'élément de soupape (12) coopère avec un siège de soupape (15), un élastomère étant appliqué sur la surface d'étanchéité (16) pour fermer l'ouverture d'entrée (9) de manière étanche au gaz par rapport à la chambre de gaz (8), et l'élément de soupape (12) pouvant être déplacé par un actionneur électrique (18), et avec une aiguille de buse (30) agencée dans la chambre de gaz (8), qui coopère avec un siège de buse (37) pour ouvrir et fermer l'ouverture de sortie (10), une douille de couplage (20) étant agencée entre l'élément de soupape (12) et l'aiguille de buse (30), laquelle transmet le déplacement longitudinal de l'élément de soupape (12) à l'aiguille de buse (30),
**caractérisée** en ce
la douille de couplage (20) est reçue sans jeu dans une ouverture de réception (14) de l'élément de soupape (12).

2. Soupape de dosage de gaz selon la revendication 1, **caractérisée en ce que** le courant de gaz est guidé de l'ouverture d'entrée (9) à l'ouverture de sortie (10) à travers la douille de couplage (20).

3. Soupape de dosage de gaz selon la revendication 1 ou 2, **caractérisée en ce que** la douille de couplage (20) est réalisée sous forme de cylindre creux et l'ouverture de réception (14) dans l'élément de soupape (12) est un trou borgne.

4. Soupape de dosage de gaz selon la revendication 3, **caractérisée en ce que** le diamètre intérieur de l'ouverture de réception (14) à l'état non monté est inférieur de 1 à 10 µm au diamètre extérieur de la section de la douille de couplage (20) qui est agencée à l'intérieur de l'ouverture de réception (14).

5. Soupape de dosage de gaz selon l'une quelconque des revendications 1 à 4, **caractérisée en ce que** la douille de couplage (20) comprend une première section de douille (120) et une deuxième section de douille (220), la première section de douille (120) étant fabriquée en un matériau ferromagnétique et étant reçue dans l'ouverture de réception (14) de l'élément de soupape (20), et la deuxième section de douille (220) étant fabriquée en un matériau non ferromagnétique, les deux sections de douille (120 ; 220) étant reliées de manière fixe l'une à l'autre.

6. Soupape de dosage de gaz selon la revendication 5, **caractérisée en ce que** les deux sections de douille (120 ; 220) sont fabriquées en matériaux métalliques et sont soudées l'une à l'autre.

7. Soupape de dosage de gaz selon l'une quelconque des revendications 1 à 6, **caractérisée en ce que** la douille de couplage (20) est guidée latéralement dans la chambre de gaz (8) sur au moins deux sections de guidage (17' ; 24) espacées axialement l'une de l'autre.

8. Soupape de dosage de gaz selon la revendication 7, **caractérisée en ce que** l'élément de soupape (12) présente latéralement un jeu de guidage si important qu'il est guidé exclusivement par la douille de couplage (20) dans la direction radiale.

9. Soupape de dosage de gaz selon l'une quelconque des revendications 1 à 8, **caractérisée en ce que** l'actionneur électrique est un électroaimant (18) et l'élément de soupape (12) est réalisé sous forme de noyau plongeur.
